## Europäisches Patentamt
## European Patent Office
## Office européen des brevets

(19)

(11) Numéro de publication: **0 108 044**
**B1**

(12) # FASCICULE DE BREVET EUROPÉEN

(45) Date de publication du fascicule du brevet:
**13.01.88**

(21) Numéro de dépôt: **83870092.0**

(22) Date de dépôt: **19.09.83**

(51) Int. Cl.⁴: **E 21 B 36/00,** E 21 B 34/06,
G 05 D 9/02, F 16 K 47/04,
F 16 K 31/34

(54) **Régulateur de débit d'eau de refroidissement pour sondages de gazéification souterraine.**

(30) Priorité: **20.09.82 LU 84383**

(43) Date de publication de la demande:
**09.05.84 Bulletin 84/19**

(45) Mention de la délivrance du brevet:
**13.01.88 Bulletin 88/2**

(84) Etats contractants désignés:
**BE DE FR GB NL**

(56) Documents cité:
BE-A-847 383
DE-A-2 808 999
FR-A-2 021 863
FR-A-2 109 165
FR-A-2 356 195
FR-A-2 357 796
FR-A-2 408 086
FR-A-2 427 999
NL-A-8 100 326
US-A-3 359 997
US-A-3 715 098
US-A-3 893 475
US-A-4 159 743
US-A-4 377 205

(73) Titulaire: **UNIVERSITE CATHOLIQUE DE LOUVAIN,**
**Place de l'Université, 1, B-1348 Louvain la Neuve**
**(BE)**

(72) Inventeur: **Patigny, Jacques, Rue de la Station, 22,**
**5880 Tourinnes- St- Lambert (BE)**
Inventeur: **Martin, Jean, 22- 106, Route de**
**Longchamp, 1348 Louvain La Neuve (BE)**
Inventeur: **Passau, Vincent, Allée des Platanes, 2,**
**6270 Loverval (BE)**

(74) Mandataire: **De Brabanter, Maurice, Bureau**
**VANDER HAEGHEN 63 Avenue de la Toison**
**d'Or, B-1060 Bruxelles (BE)**

EP 0 108 044 B1

## Description

La présente invention est relative à un dispositif régulateur d'un débit d'eau alimentant à partir de la surface un dispositif de refroidissement des gaz produits par gazéification d'un gisement souterrain de charbon, ce dispositif de refroidissement étant disposé au fond d'un puits d'évacuation desdits gaz.

L'invention trouve sa principale application dans la gazéification souterraine, en particulier dans les équipements destinés à refroidir les puits d'évacuation des gaz produits. L'évacuation de ces gaz produits par gazéification in situ de gisements charbonniers enfouis grande profondeur (1000 m et plus) implique de relier ces couches de charbon avec la surface au moyen d'un nombre important de tiges creuses d'évacuation (désignés ci-après par puits). L'évacuation des gaz produits exige toutefois une étanchéité parfaite du gazogène souterrain, en particulier aux endroits de raccordement des couches de charbon avec les puits. A cet effet, les puits sont scellés sur une hauteur suffisante dans les terrains surplombant le gisement, au moyen de ciment réfractaire. Néanmoins les puits, traversés par les gaz produits ayant une température de 700 à 1000°C tendent à se dilater et soumettant les scellements à d'importantes contraintes. En pratique l'étanchéité des scellements ne peut être garantie si la température des puits (et donc des gaz) dépasse 250 à 300°C.

Pour sauvegarder l'étanchéité des scellements, il a déjà été proposé d'installer dans chaque puits de récupération, de préférence près des couches de charbon, un dispositif de refroidissement qui ramène le gaz produit à une température admissible de l'ordre de 250°C.

A cet effet, certains auteurs ont proposé de pulvériser de l'eau directement dans le courant gazeux. Le document BE-A-847 383 décrit une solution alternative dans laquelle le refroidissement du gaz est assuré par un échangeur de chaleur à soupape, alimenté en eau à partir de la surface, de manière à produire de la vapeur qui est ensuite mélangée au courant gazeux. La fermeture de la soupape se fait de façon extrêmement brusque et engendre de puissants coups de béliers.

Une caractéristique commune à ces systèmes est la difficulté de régler le débit d'eau injecté. Or, un réglage précis est nécessaire étant donné que trop peu d'eau conduit à la surchauffe et à la destruction du tubage, et que trop d'eau entraîne des perturbations de l'écoulement du gaz, voire l'envahissement du puits.

Le réglage du débit d'eau par une action exercée en surface est difficile en raison de la précarité des informations disponibles sur les conditions prévalant au fond du puits; il est d'autre part inefficace en raison de l'existence d'une colonne d'eau de quelque 1000 m de hauteur en amont de l'organe régulateur.

On est donc contraint de réaliser le réglage au fond du puits et de résoudre les difficultés inhérentes à cette solution.

Il n'est en effet pas possible de mettre en oeuvre des moyens de réglage connus, en raison des exigences suivantes:
- l'encombrement de ces moyens doit être réduit, car les puits de gazéification souterraine ont des faibles diamètres généralement compris entre 200 et 250 mm;
- on ne peut utiliser que des moyens de réglage mécaniques, du fait des températures élevées;
- le fonctionnement doit rester fiable dans des ambiances agressives (haute température, haute pression, gaz acide);
- le comportement dynamique doit être satisfaisant; il faut en particulier éviter les coups de bélier et les instabilités de réglage.

La présente invention propose un dispositif régulateur de débit qui satisfait aux conditions évoquées ci-dessus.

Elle a pour but de pallier les inconvénients des dispositifs régulateurs connus et concerne un dispositif régulateur de débit qui permet d'effectuer le réglage au fond du puits. Elle apporte une solution aux problèmes techniques d'encombrement, de résistance aux températures élevées, de fiabilité et de comportement dynamique.

On connaît par le document US-A-3 893 475 un obturateur à flotteur, destiné à maintenir constant un niveau d'un liquide admis dans un récipient à partir d'une source de liquide sans pression, cet obturateur étant soumis à la pression du liquide venant de ladite source et à la pression créée par le liquide venant de cette source, admise dans une chambre de contrôle à travers un conduit ménagé dans l'obturateur, cette chambre de contrôle présentant un orifice permettant une montée régulée par un pointeau, du liquide contenu dans cette chambre.

L'invention concerne un dispositif régulateur d'un débit d'eau alimentant un dispositif de refroidissement, du type indiqué dans le premier paragraphe du présent mémoire, ce dispositif de refroidissement présentant un orifice d'entrée d'eau pouvant être obturé par un obturateur soumis, d'une part, à la pression de l'eau venant de la surface et, d'autre part, à l'action d'un organe élastique et à la pression créée par l'eau venant de la surface admise dans une chambre à travers un conduit ménagé dans l'obturateur, cette chambre présentant un orifice permettant une sortie, régulée par un pointeau, de l'eau contenue dans cette chambre, l'obturateur constituant la tête d'un corps allongé présentant, en aval de cette tête, des zones coniques alternant avec des zones cylindriques, ce corps allongé se déplaçant axialement dans un espace cylindrique d'admission de l'eau dans le dispositif de refroidissement et dont la paroi comporte des sections rétrécies permettant des variations progressives de la section de passage de l'eau admise dans le dispositif de refroidissement.

Selon un mode préféré de réalisation de l'invention, la chambre précitée est formée par un soufflet.

Dans une forme d'exécution particulièrement avantageuse de l'invention, le conduit du corps allongé comporte une succession de restrictions et d'élargissements.

D'autres détails du dispositif régulateur suivant l'invention apparaîtront au cours de la description détaillée suivante dans laquelle il est fait référence aux dessins ci-annexés.

Dans ces dessins:

- la figure 1 est une coupe d'un schéma d'ensemble d'un sondage muni d'un dispositif de refroidissement et d'un régulateur de débit;
- la figure 2 montre un schéma d'un dispositif régulateur de débit suivant l'invention;
- la figure 3 est une coupe du dispositif régulateur de débit suivant l'invention.

Dans ces dessins, les mêmes notations de référence désignent des éléments identiques ou analogues.

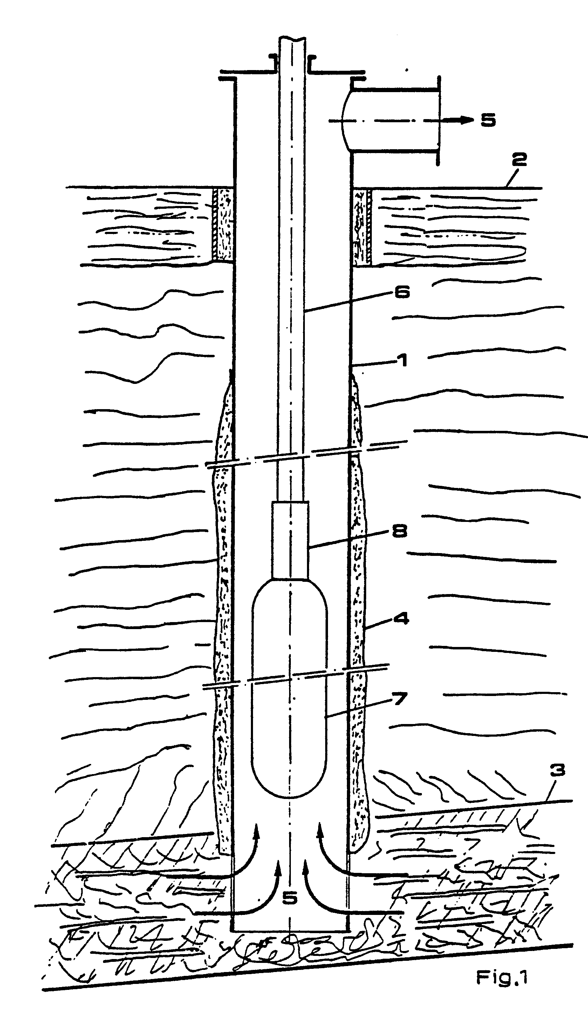

La figure 1 montre un puits reliant la surface 2 à un gisement charbonnier 3. Une couche de ciment réfractaire 4 entoure le tube 1 du puits. Le gaz produit est représenté par les flèches portant le numéro de référence 5.

A l'intérieur du puits 1 se trouve un tuyau d'alimentation d'eau 6 comportant en bas un dispositif de refroidissement 7 muni d'un dispositif régulateur de débit 8.

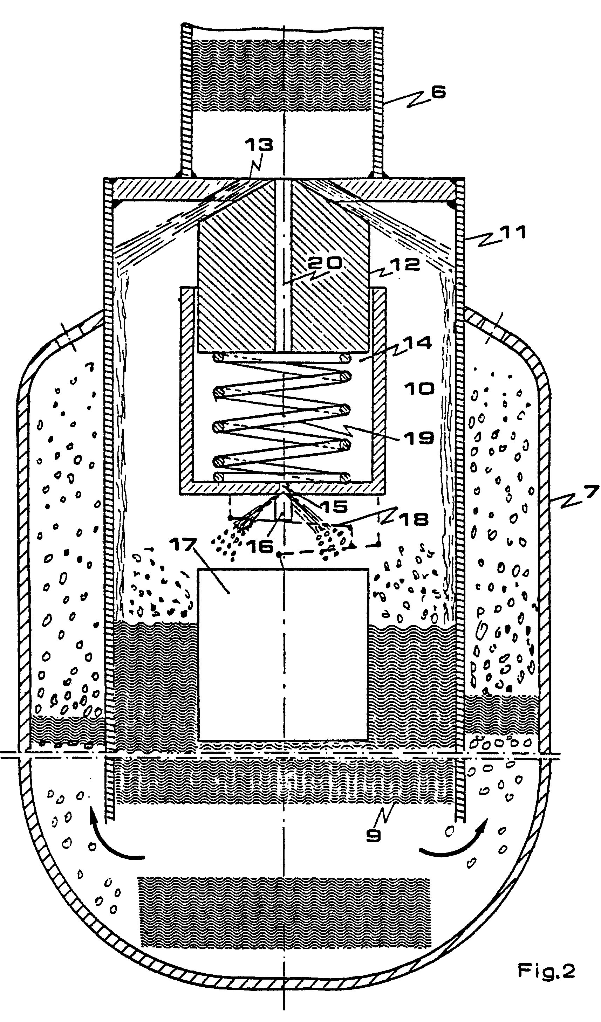

La figure 2 montre un dispositif de refroidissement comportant une enceinte 11 dans laquelle la phase liquide 9 de l'eau est en équilibre avec la phase vapeur 10.

L'entrée de l'eau dans l'enceinte 11 est contrôlée par le dispositif régulateur de débit 8 comportant un piston 12 monté dans une chambre 14 et dont la tête joue le rôle d'obturateur d'un orifice 13 situé au pied du tube 6 amenant l'eau sous forte pression (par exemple 100 bars) depuis la surface. Le fond de la chambre 14 est percé d'un petit orifice 15 permettant à l'eau contenue dans la chambre 14 de s'en échapper. L'ouverture ou la fermeture de cet orifice 15 est commandée par un pointeau 16 dont la position est fixée par le niveau d'eau dans le dispositif 7, assurant le refroidissement du gaz.

A cet effet, un flotteur 17 est relié au pointeau 16 par un jeu de leviers 18. Un ressort 19 inséré dans la chambre 14 s'oppose au déplacement du piston 12 vers le bas. La position d'équilibre du piton est obtenue lorsque la résultante des forces qui s'exercent sur lui est nulle.

Il est clair que, lorsque l'orifice 15 est fermé, la pression de l'eau dans la chambre 14 remonte jusqu'à la valeur de la pression dans le tuyau d'alimentation 6. Lorsque le pointeau 16 est abaissé, il s'établit un débit "secondaire" à travers la chambre 14 et la pression dans celle-ci sera déterminée par l'importance relative des pertes de charge d'une part dans un conduit d'admission 20 foré à travers le piston 12, d'autre part dans l'orifice 15 contrôlé par le pointeau 16.

Ce dispositif constitue donc un servomécanisme amplifiant à la fois le déplacement et la force du dispositif régulateur de débit 8, en faisant usage de l'énergie potentielle disponible dans l'eau en amont du dispositif régulateur de débit 8. Dans une forme de mise en exécution, la course du piston 12 est de l'ordre de 10 fois celle du pointeau 16 et la force appliquée au piston 12 de l'ordre de 300 fois celle exercée sur le pointeau 16.

Comme mentionné ci-dessus, le mouvement du pointeau 16 est commandé par un flotteur 17 qui suit le déplacement du niveau d'eau dans le dispositif 7.

Dans les conditions de fonctionnement prévues (20 à bars), la différence de densité entre les phases liquide et vapeur est faible et la poussée d'Archiméde sur le flotteur 17 est modeste; c'est pourquoi cette poussée a dû être amplifiée par un jeu de leviers 18 interposé entre le flotteur 17 et le pointeau 16.

Le fonctionnement de l'ensemble du dispositif régulateur de débit 8 se récapitule comme suit. Supposons que le niveau d'eau descende dans le dispositif de refroidissement 7; le flotteur 17 accompagne cette descente et transmet son déplacement au pointeau 16 qui descend à son tour et réduit la résistance offerte en 15 à l'échappement du débit secondaire. Dès lors la pression tombe dans la chambre 14, le piston 12 descend et ouvre l'orifice 13, augmentant le débit principal jusqu'à retrouver un nouvel équilibre. Le processus est inversé lorsque le niveau monte dans le dispositif de refroidissement 7.

Etant donné que la pression dans la chambre 14 est fixée par l'importance relative des pertes de charge à l'entrée et à la sortie de la chambre, le débit de fuite autour du piston 12 doit rester négligeable devant les débits entrant et sortant. D'ailleurs, si le débit de fuite devenait important, il pourrait provoquer une perte de charge supplémentaire à l'amont telle que la pression dans la chambre 14 ne puisse plus atteindre une valeur suffisante pour refermer l'orifice 13. Suivant une forme de mise en application, on peut remplacer l'ensemble formé par les parois latérales de la chambre 14 et le ressort 19 par un soufflet de dilatation 22 se raccordant de façon étanche à un corps allongé 23 traversé d'un conduit d'admission 20.

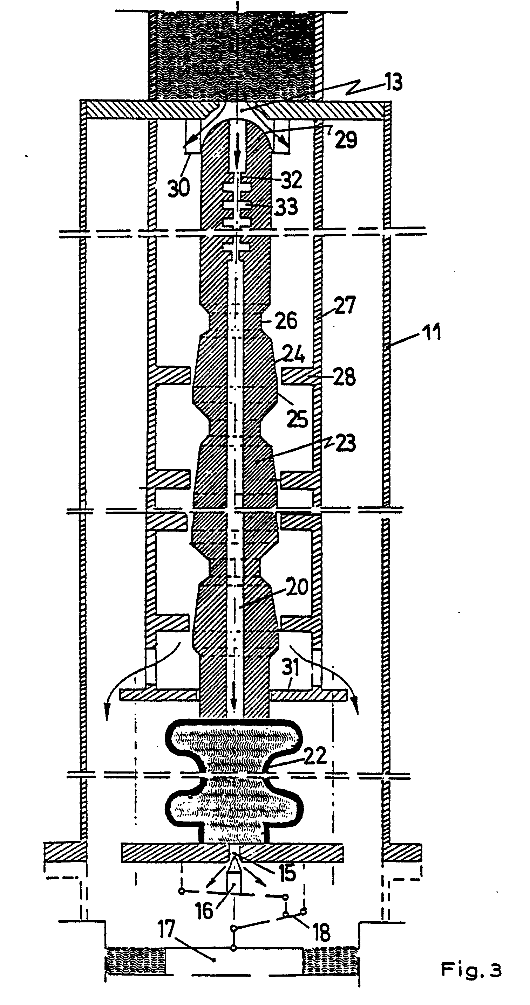

En vue de maîtriser la température dans les puits 1 de production, il est nécessaire de moduler le débit d'eau de façon précise dans un large domaine, par exemple, entre 10 à 100; du débit nominal. A cet effet, l'invention propose un corps allongé formant obturateur d'une géométrie originale. En se référant à la figure 3, celle-ci montre un soufflet de dilatation 22 solidaire d'une unité de contrôle de l'entrée d'eau. Cette unité comporte un corps allongé 23 et est constitué d'une pluralité de zones coniques 24 alternant avec des zones cylindriques 25 et 26. Ce corps 23 se déplace dans un espace cylindrique dont les parois 27 comportent des sections annulaires rétrécies 28. Les pièces 30 et 31 assurent le guidage du corps allongé 23.

Lorsque le corps 23 est voisin de sa position la plus haute, c'est-à-dire fermeture de l'orifice 13, les parties cylindriques 25 se trouvent en face des sections annulaires rétrécies 28 et ne laissent passer qu'un débit minimum; un obturateur 29 situé en tête du corps allongé 23 permet d'annuler ce débit en position fermée. Lorsque le corps 23 descend, les parties coniques 24 se présentent en face des sections annulaires rétrécies 28. Du fait de cette conicité, on obtient une variation progressive et linéaire des sections de passage (et donc du débit) à mesure que le corps 23 descend.

Lorsque le corps 23 est à sa position extrême basse, les parties cylindriques 25 se présentent en face des sections annulaires rétrécies 28. Cette position du corps 23 est en dehors de la plage normale de fonctionnement; elle permet au débit nominal de s'écouler alors que, par suite d'une surchauffe accidentelle de l'eau en amont, la détente entraîne une vaporisation partielle.

Le nombre de rétrécissements est adapté à la chute de pression à réaliser et donc à la profondeur du sondage de gazéification.

La colonne d'eau en mouvement au-dessus du dispositif régulateur de débit 8 possède une masse et une inertie importantes. La masse dépasse 1 tonne pour un tuyau de 5 cm de diamètre et de 1000 m de longueur. Une action de fermeture trop rapide du dispositif 8 engendre de puissants coups de bélier. Pour éviter cet inconvénient, la vitesse de déplacement du corps obturateur 23 est limitée pendant la phase de fermeture. En effet, pendant cette phase, le débit secondaire entrant est majoré par rapport au débit sortant d'un débit supplémentaire nécessaire à gonfler le soufflet 22. En dimensionnant le conduit 20 et le soufflet 22, on peut choisir à volonté la vitesse de fermeture du régulateur et donc la vitesse de variation du débit, de façon à réduire autant que nécessaire la surpression dans la conduite amont au cours de la fermeture.

A cet effet le conduit 20 est équipé d'une succession de restrictions 32 et d'élargissements 33. A chaque restriction, l'eau acquiert de l'énergie cinétique qu'elle perd dans la zone élargie suivante où l'écoulement est fortement turbulent. Le nombre de restrictions et d'élargissements doit être adapté à l'importance de la pression amont et donc à la profondeur du puits.

Les composants décrits doivent être assemblés dans un volume cylindrique aussi étroit que possible, afin de pouvoir être glissé facilement à l'intérieur du tubage des sondages.

Pour réduire l'encombrement en largeur du corps allongé 23, les restrictions et élargissements secondaires 32, 33 sont disposés au-dessus des zones cylindriques et coniques 24-25-26.

Nous avons décrit le cas où le dispositif régulateur de débit est destiné à contrôler le niveau d'eau dans un échangeur de chaleur produisant de la vapeur d'eau. Il est évident qu'on peut utiliser ce dispositif avec d'autres systèmes de refroidissement.

De même, le contrôle direct du mouvement du pointeau peut être obtenu par la température des gaz en aval de l'échangeur. Dans ce cas, le pointeau peut être fixé à un étrier soutenu par des tiges placées dans le courant gazeux autour de l'enceinte et constituées d'un matériau à fort coefficient de dilatation.

Le pointeau peut également être monté sur une membrane d'une capsule manométrique, ainsi lorsque la pression baisse, la membrane s'abaisse et provoque l'ouverture du régulateur, et vice versa.

Les avantages du régulateur réalisé selon l'invention sont évidents et peuvent être résumés comme suit:
- appareil de géométrie cylindrique approprié aux sondages à grande profondeur;
- apte à régler des débits d'eau de 10 à 100 % avec précision, de façon linéaire en fonction de l'écart à la consigne;
- apte à fonctionner sous des écarts de pression élevés (100 bars et plus);
- apte à fonctionner avec de l'eau chaude (jusqu'à 250° C) devenant diphasique en cours de détente;
- faisant usage de la pression amont pour actionner l'obturateur selon un principe de servomécanisme hydraulique;
- apte à se fermer de façon étanche;
- apte à fonctionner sous le contrôle de grandeurs physiques diverses (niveau, température, pression);
- apte à éviter les coups de bélier grâce à la mise en oeuvre d'une limitation automatique de la vitesse de fermeture;
- utilisant un dispositif d'étranglement à géométrie originale (labyrinthe) tant pour le débit principal que pour le débit secondaire traversant le servomécanisme de réglage;
- apte à fonctionner avec divers liquides,
- apte à divers usages (détendeur, limiteur de pression, etc...).

**Revendications**

1. Dispositif régulateur d'un débit d'eau alimentant à partir de la surface (2) un dispositif de refroidissement (7) des gaz produits par gazéification d'un gisememt souterrain de charbon (3), ce dispositif de refroidissement (7) étant disposé au fond d'un puits (1) d'évacuation desdits gaz et présentant un orifice (13) d'entrée d'eau pouvant être obturé par un obturateur (29) soumis, d'une part, à la pression de l'eau venant de la surface (2) et d'autre part, à l'action d'un organe élastique (19, 22) et à la pression créée par l'eau venant de la surface (2) admise dans une chambre (14) à travers un conduit (20) ménagé dans l'obturateur (29), cette chambre (14) présentant un orifice (15) permettant une sortie régulée par un pointeau (16) de l'eau contenue dans cette chambre (14), l'obturateur (29) constituant la tête d'un corps allongé (23) présentant, en aval de cette tête (29), des zones coniques (24) alternant avec des zones cylindriques (25, 26), ce corps allongé (23) se déplaçant axialement dans un espace cylindrique d'admission de l'eau dans le dispositif de refroidissement et dont la paroi (27) comporte des sections rétrécies (28) permettant des variations progressives de la section de passage de l'eau admise dans le dispositif de refroidissement (7).

2. Dispositif régulateur selon la reveidication 1, dans lequel la chambre (14) est formée par un soufflet (22).

3. Dispositif régulateur de débit selon la revendication 1 ou 2, dans lequel le conduit (20) du corps allongé (23) comporte une succession de restrictions (32) et d'élargissements (33).


**Patentansprüche**

1. Reguliervorrichtung für eine Wassermenge, welche ausgehend von der Oberfläche (2) eine Kühlvorrichtung (7) für die Gase versorgt, die durch Vergasung einer unterirdischen Kohlelagerstätte (3) erzeugt werden, wobei die Kühlvorrichtung (7) am Boden eines Schachtes (1) zum Auslaß der Gase angeordnet ist und eine Öffnung (13) zum Wassereinlaß aufweist, die durch einen Verschluß (29) verschließbar ist, welcher einerseits dem Druck des von der Oberfläche (2) kommenden Wassers und andererseits der Wirkung eines elastischen Organs (19, 22) und dem Druck ausgesetzt ist, der durch das von der Oberfläche (2) kommende und über eine im Verschluß (29) ausgebildete Leitung (20) in eine Kammer (14) eingelassene Wasser erzeugt wird, wobei die Kammer (14) eine Öffnung (15) aufweist, die einen durch eine Düsennadel (16) geregelten Austritt des in dieser Kammer (14) enthaltenen Wassers zuläßt, der Verschluß (29) den Kopf eines länglichen Körpers (23) bildet, welcher stromabwärts des Kopfes (29) mit zylindrischen Zonen (25, 26) alternierende konische Zonen (24) aufweist, sich der längliche Körper (23) axial in einem zylindrischen Raum zum Einlaß des Wassers in die Kühlvorrichtung verschiebt, und die Wand (27) der Kammer verengte Abschnitte (28) aufweist, welche progressive Veränderungen des Durchlaßbereiches für das in die Kühlvorrichtung (7) eingelassene Wasser gestatten.

2. Reguliervorrichtung nach Anspruch 1, bei der die Kammer (14) aus einem Balg (22) besteht.

3. Mengen-Reguliervorrichtung nach Anspruch 1 oder 2, bei der die Leitung (20) des länglichen Körpers (23) eine Folge von Verengungen (32) und Erweiterungen (33) aufweist.


**Claims**

1. A water flow regulating device feeding from the surface (2) a cooling device (7) of the gases produced by gasification of an underground coal deposit (3), this cooling device (7) being put at the bottom of a recovery well (1) for aforesaid gases and presenting a hole (13) for water inlet that can be sealed off by a throttling device (29) submitted on the one hand to the pressure of the water coming from the surface (2) and on the other hand to the action of an elastic element (19, 22) and to the pressure created by the water coming from the surface (2) admitted in a chamber (14) through a conduit (20) arranged in the throttling device (29), this chamber (14) presenting a hole (15) for regulating by means of a needle (16) the outlet of the water contained in this chamber (14), the throttling device (29) forming the head of an elongated body (23) presenting downstream of this head tapered zones (24) alternating with cylindrical zones (25, 26), this elongated body (23) moving axially in a cylindrical water admission space in the cooling device and the walls (27) of which have narrow parts (28) allowing gradual variations of the passage section of the water admitted in the cooling device.

2. A regulating device as set forth in claim 1 in which the chamber (14) is formed by bellows (22).

3. A flow regulating device as set forth in claims 1 and 2 in which the conduit (20) of the elongated body (23) is made up of a series of narrowings (32) and widenings (33).

Fig.1

Fig.2

Fig. 3